# EUROPEAN PATENT APPLICATION

(11) **EP 4 436 237 A1**
(43) Date of publication of application: **25.09.2024**
(21) Application number: 22895623.1
(22) Date of filing: 16.11.2022
(51) Int. Cl.: H04W 16/28, H04W 76/20

(54) **TERMINAL, WIRELESS COMMUNICATION METHOD, AND BASE STATION**

(30) Priority: 19.11.2021 JP 2021188380
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/042481
(87) International publication number: WO 2023/090342

(57) **Abstract**

To appropriately control a beam to be applied after beam failure detection or beam failure recovery, even when a plurality of transmission/reception points are used. A terminal according to one aspect of the present disclosure includes a transmitting section that reports information related to a new candidate beam in beam failure recovery, a control section that determines application of the new candidate beam as quasi-co-location assumption corresponding to a downlink shared channel, based on whether or not a certain condition is satisfied, after the beam failure recovery completes, and a receiving section that receives the downlink shared channel, based on the quasi-co-location assumption.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (LTE Rel. 8 to Rel. 15), monitoring of radio link quality (radio link monitoring (RLM)) is performed. When a radio link failure (RLF) is detected owing to RLM, re-establishment of RRC (Radio Resource Control) connection is required for a user terminal (User Equipment (UE)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), performing procedures of detecting a beam failure and switching to another beam (which may be referred to as beam failure recovery (BFR) procedures, BFR, link recovery procedures, or the like) has been under study.

In NR of Rel. 17 or later versions, it is also assumed that the terminal (UE) performs communication using a plurality of transmission/reception points (TRPs)/UE panels. In this case, although it is considered that beam failure detection is performed in a plurality of TRPs/plurality of UE panels, how to control a beam (or QCL assumption/TCI state) to be applied after beam failure detection (BFD) or beam failure recovery (BFR) poses a problem. Unless the beam to be applied after beam failure detection or beam failure recovery in each TRP/UE panel can be appropriately controlled, communication throughput may be reduced or communication quality may be deteriorated.

The present disclosure is made in view of such circumstances, and has one object to provide a terminal, a radio communication method, and a base station that can appropriately control beam to be an applied after beam failure detection or beam failure recovery even when a plurality of transmission/reception points are used.

### Solution to Problem

A terminal according to one aspect of the present disclosure includes a transmitting section that reports information related to a new candidate beam in beam failure recovery, a control section that determines application of the new candidate beam as quasi-co-location assumption corresponding to a downlink shared channel, based on whether or not a certain condition is satisfied, after the beam failure recovery completes, and a receiving section that receives the downlink shared channel, based on the quasi-co-location assumption.

### Advantageous Effects of Invention

According to one aspect of the present disclosure, even when a plurality of transmission/reception points are used, a beam to be applied after beam failure detection or beam failure recovery can be appropriately controlled.

### Brief Description of Drawings

[FIG. 1] FIG. 1 is a diagram to show an example of a beam recovery procedure in Rel-15 NR.
[FIG. 2] FIG. 2A and FIG. 2B are diagrams to show examples of a scheduling offset between a PDCCH and a PDSCH.
[FIG. 3] FIG. 3A and FIG. 3B are diagrams to show examples of QCL assumption used for the PDSCH according to the present embodiment.
[FIG. 4] FIG. 4A and FIG. 4B are diagrams to show other examples of QCL assumption used for the PDSCH according to the present embodiment.
[FIG. 5] FIG. 5A and FIG. 5B are diagrams to show other examples of QCL assumption used for the PDSCH according to the present embodiment.
[FIG. 6] FIG. 6 is a diagram to show an example of a schematic structure of a radio communication system according to one embodiment.
[FIG. 7] FIG. 7 is a diagram to show an example of a structure of a base station according to one embodiment.
[FIG. 8] FIG. 8 is a diagram to show an example of a structure of a user terminal according to one embodiment.
[FIG. 9] FIG. 9 is a diagram to show an example of a hardware structure of the base station and the user terminal according to one embodiment.
[FIG. 10] FIG. 10 is a diagram to show an example of a vehicle according to one embodiment.

### Description of Embodiments

### (Beam Failure Detection)

In NR, communication is performed by using beam forming. For example, a UE and a base station (for example, gNB (gNodeB)) may use a beam used for signal transmission (also referred to as a transmit beam, Tx beam, or the like) and a beam used for signal reception (also referred to as a receive beam, Rx beam, or the like).

Using the beam forming is susceptible to interference from an obstruction, and thus it is assumed that radio link quality deteriorates. Due to deterioration of the radio link quality, radio link failure (RLF) may occur frequently. Occurrence of the RLF requires reconnection of a cell, and thus frequent occurrence of the RLF causes deterioration of system throughput.

In NR, in order to suppress occurrence of the RLF, a procedure for switching to another beam (which may be referred to as beam recovery (BR), beam failure recovery (BFR), L1/L2 (Layer 1/Layer 2) beam recovery, or the like) in a case where quality of a specific beam deteriorates. Note that the BFR procedure may be referred to simply as BFR.

Note that beam failure (BF) in the present disclosure may be referred to as link failure.

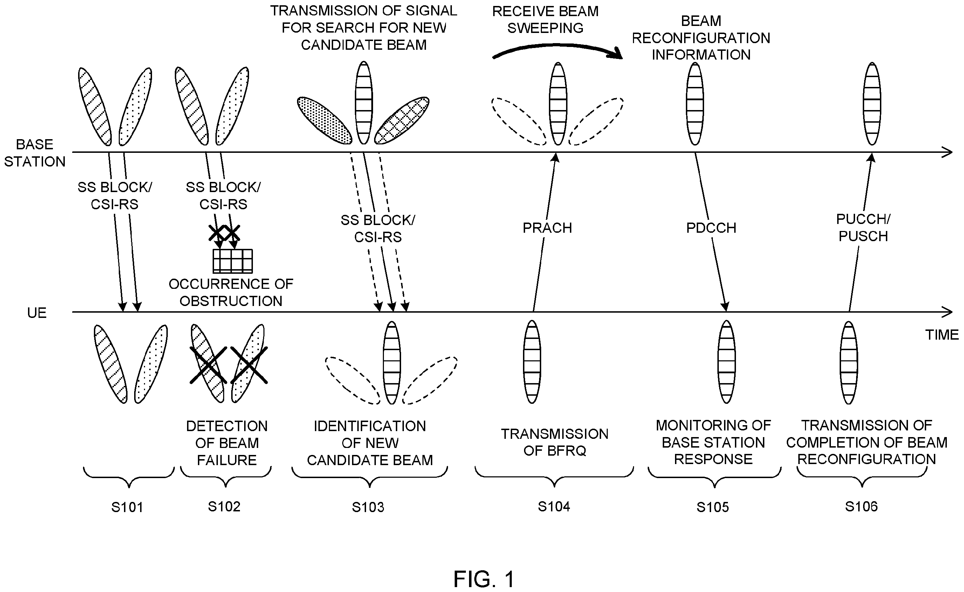

FIG. 1 is a diagram to show an example of the beam recovery procedure in Rel-15 NR. The number of beams and the like are just examples, and are not limited to this. In an initial state (step S101) of FIG. 1, the UE performs measurement based on a reference signal (RS) resource transmitted by using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block or the like.

The RS may be at least one of a primary synchronization signal (Primary SS (PSS)), a secondary synchronization signal (Secondary SS (SSS)), a mobility reference signal (Mobility RS (MRS)), a signal included in the SSB, the SSB, the CSI-RS, a demodulation reference signal (DMRS), a beam-specific signal, and the like, or may be a signal constituted by expanding, changing, or the like these signals. The RS measured at step S101 may be referred to as an RS for beam failure detection (Beam Failure Detection RS (BFD-RS)), an RS to be used for a beam recovery procedure (BFR-RS), and the like.

At step S102, due to radio waves from the base station being interfered, the UE fails to detect a BFD-RS (or reception quality of an RS deteriorates). Such interference may occur due to an influence of an obstacle, fading, interference, or the like between the UE and the base station, for example.

The UE detects beam failure when a certain condition is satisfied. For example, the UE may detect occurrence of the beam failure when a BLER (Block Error Rate) for all of configured BFD-RSs (BFD-RS resource configurations) is less than a threshold value. When occurrence of the beam failure is detected, a lower layer (physical (PHY) layer) of the UE may notify (indicate) a beam failure instance for a higher layer (MAC layer).

Note that judgment standards (criteria) are not limited to the BLER, and may be reference signal received power in the physical layer (Layer 1 Reference Signal Received Power (L1-RSRP)). Instead of the RS measurement or in addition to the RS measurement, beam failure detection may be performed based on downlink control channel (Physical Downlink Control Channel (PDCCH)) or the like. The BFD-RS may be expected to be quasi-co-located (QCLed) with a DMRS for a PDCCH monitored by the UE.

Here, QCL is an indicator indicating statistical properties of the channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

Information related to the BFD-RS (for example, indices, resources, numbers, the number of ports, precoding, and the like for the RS), information related to the beam failure detection (BFD) (for example, the above-mentioned threshold value), and the like may be configured (notified) for the UE by using higher layer signaling or the like. The information related to the BFD-RS may be referred to as information related to resources for BFR or the like.

In the present disclosure, the higher layer signaling may be, for example, any one or combinations of RRC (Radio Resource Control) signaling, MAC (Medium Access Control) signaling, broadcast information, and the like.

For example, the MAC signaling may use MAC control elements (MAC CE), MAC PDUs (Protocol Data Units), and the like. The broadcast information may be, for example, a master information block (MIB), a system information block (SIB), minimum system information (Remaining Minimum System Information (RMSI)), other system information (OSI), or the like.

A higher layer (for example, the MAC layer) of the UE may start a certain timer (which may be referred to as a beam failure detection timer) when receiving beam failure instance notification from the PHY layer of the UE. The MAC layer of the UE may trigger BFR (for example, start any one of random access procedures mentioned below) when receiving the beam failure instance notification certain times (for example, *beamFailureInstanceMaxCount* configured by RRC) or more until the timer expires.

When there is no notification from the UE or when receiving a certain signal (beam recovery request at step S104) from the UE, the base station may judge that the UE has detected beam failure.

At step S103, for beam recovery, the UE starts a search for a new candidate beam for use in new communication. The UE may select, by measuring a certain RS, the new candidate beam corresponding to the RS. The RS measured at step S103 may be referred to as a new candidate RS, an RS for new candidate beam identification, an NCBI-RS (New Candidate Beam Identification RS), an RS for new beam identification, a new beam identification RS, an NBI-RS (New Beam Identification RS), a CBI-RS (Candidate Beam Identification RS), a CB-RS (Candidate Beam RS), or the like. The NBI-RS may be the same as the BFD-RS, or may be different from the BFD-RS. Note that the new candidate beam may be simply referred to as a new beam, a candidate beam, or a candidate RS.

The UE may determine a beam corresponding to an RS satisfying a certain condition as the new candidate beam. The UE may determine a new candidate beam from among configured NBI-RSs, based on an RS with an L1-RSRP exceeding a threshold value, for example. Note that judgment standards (criteria) are not limited to the L1-RSRP. The L1-RSRP related to an SSB may be referred to as SS-RSRP. The L1-RSRP related to a CSI-RS may be referred to as CSI-RSRP.

Information related to the NBI-RS (for example, resources, numbers, the number of ports, precoding, and the like for the RS), information related to new beam identification (NBI) (for example, the above-mentioned threshold value), and the like may be configured (notified) for the UE by using higher layer signaling or the like. The information related to the new candidate RS (or NBI-RS) may be acquired based on information related to the BFD-RS. The information related to the NBI-RS may be referred to as information related to resources for NBI or the like.

Note that the BFD-RS, the NBI-RS, and the like may be interchangeably interpreted as a radio link monitoring reference signal (Radio Link Monitoring RS (RLM-RS)).

At step S104, the UE that has identified the new candidate beam transmits a beam recovery request (Beam Failure Recovery reQuest (BFRQ)). The beam recovery request may be referred to as a beam recovery request signal, a beam failure recovery request signal, or the like.

The BFRQ may be transmitted, for example, by using at least one of an uplink control channel (Physical Uplink Control Channel (PUCCH)), a random access channel (Physical Random Access Channel (PRACH)), an uplink shared channel (Physical Uplink Shared Channel (PUSCH)), and a configured grant (CG) PUSCH.

The BFRQ may include information of the new candidate beam / new candidate RS identified at step S103. Resources for the BFRQ may be associated with the new candidate beam. The information of the beam may be notified by using a beam index (BI), a port index of a certain reference signal, an RS index, a resource index (for example, a CSI-RS resource indicator (CRI)), an SSB resource indicator (SSBRI), or the like.

For Rel-15 NR, CB-BFR (Contention-Based BFR) that is BFR based on contention-based random access (RA) procedure and CF-BFR (Contention-Free BFR) that is BFR based on non-contention based random access procedure are studied. In the CB-BFR and the CF-BFR, the UE may transmit a preamble (also referred to as an RA preamble, a random access channel (Physical Random Access Channel (PRACH)), a RACH preamble, or the like) as the BFRQ by using PRACH resources.

In the CB-BFR, the UE may transmit a preamble randomly selected from one or a plurality of preambles. In contrast, in the CF-BFR, the UE may transmit a preamble allocated by the base station in a UE-specific manner. In the CB-BFR, the base station may allocate the same preamble for a plurality of UEs. In the CF-BFR, the base station may allocate a preamble in a UE-dedicated manner.

Note that the CB-BFR and the CF-BFR may be referred to as CB PRACH-based BFR (contention-based PRACH-based BFR (CBRA-BFR)) and CF PRACH-based BFR (contention-free PRACH-based BFR (CFRA-BFR)), respectively. The CBRA-BFR may be referred to as CBRA for BFR. The CFRA-BFR may be referred to as CFRA for BFR.

In both the CB-BFR and the CF-BFR, information related to a PRACH resource (RA preamble) may be notified by higher layer signaling (RRC signaling or the like), for example. For example, the information may include information indicating a correspondence relationship between a detected DL-RS (beam) and the PRACH resource, and a different PRACH resource may be associated with each DL-RS.

At step S105, the base station that has detected the BFRQ transmits a response signal (which may be referred to as gNB response or the like) in response to the BFRQ from the UE. The response signal may include reconfiguration information about one or a plurality of beams (for example, DL-RS resource configuration information).

The response signal may be transmitted in, for example, a UE-common search space of a PDCCH. The response signal may be notified by using a PDCCH (DCI) cyclic-redundancy-check (CRC) scrambled by a UE identifier (for example, a cell-radio RNTI (C-RNTI)). The UE may judge at least one of a transmit beam and a receive beam to use, based on beam reconfiguration information.

The UE may monitor the response signal, based on at least one of a control resource set (CORESET) for BFR and a search space set for BFR.

With respect to the CB-BFR, when the UE receives a PDCCH corresponding to a C-RNTI related to the UE itself, it may be judged that contention resolution has succeeded.

With respect to processing at step S105, a period for the UE to monitor response from the base station (for example, gNB) to the BFRQ may be configured. The period may be referred to as, for example, a gNB response window, a gNB window, a beam recovery request response window, and the like. The UE may perform retransmission of the BFRQ when there is no gNB response detected in the window period.

At step S106, the UE may transmit, to the base station, a message indicating that beam reconfiguration has been completed. For example, the message may be transmitted on a PUCCH, or may be transmitted on a PUSCH.

Beam recovery success (BR success) may represent, for example, a case where step S106 has been reached. On the other hand, beam recovery failure (BR failure) may correspond to, for example, a case that BFRQ transmission has reached a certain number of times or a case that a beam failure recovery timer (Beam-failure-recovery-Timer) has expired.

In Rel. 15, it is supported to perform a beam recovery procedure for beam failure detected in an SpCell (PCell/PSCell) (for example, notification of BFRQ), by using a random access procedure.

In contrast, in Rel. 16, it is supported to perform a beam recovery procedure for beam failure detected in an SCell (for example, notification of BFRQ (step S104 of FIG. 1)), by using at least one of PUCCH (for example, scheduling request (SR)) transmission for BFR and a MAC CE (for example, UL-SCH) transmission for BFR. For example, the UE may use two MAC CE-based steps to transmit information related to the beam failure. The information related to the beam failure may include information related to the cell in which the beam failure has been detected and information related to a new candidate beam (or a new candidate RS index).

### {Step 1}

In a case where BF is detected, PUCCH-BFR (scheduling request (SR)) may be transmitted from the UE to a PCell/PSCell.

The PUCCH-BFR may be referred to as a PUCCH-SR, a PUCCH-SR for BFR, or a PUCCH for SR. Subsequently, a UL grant (DCI) for Step 2 below may be transmitted from the PCell/PSCell to the UE. When a MAC CE (or a UL-SCH) for transmitting information related to a new candidate beam is present in the case where beam failure is detected, Step 2 (for example, MAC CE transmission) may be performed with the omission of Step 1 (for example, PUCCH transmission).

### {Step 2}

Subsequently, the UE may transmit information related to the cell in which the beam failure has been detected (failed) (for example, a cell index) and the information related to the new candidate beam to the base station (PCell/PSCell) via an uplink channel (for example, a PUSCH) by using a MAC CE. Thereafter, through the BFR procedure, the QCL of the PDCCH/PUCCH/PDSCH/PUSCH may be updated to a new beam after a certain period (for example, 28 symbols) from reception of a response signal from the base station.

Note that these step numbers are just numbers for description, and a plurality of steps may be combined with each other, or the order of the steps may be changed. Whether to perform the BFR may be configured for the UE by using higher layer signaling.

### (Spatial Relation Information)

In NR, the UE controls transmission processing (for example, at least one of transmission, mapping, precoding, modulation, and coding) of at least one of an uplink signal and channel (also referred to as a signal/channel), based on a certain spatial relation.

The spatial relation to be applied to a certain signal/channel may be identified by spatial relation information (SRI) notified (configured) using higher layer signaling.

Note that, in the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

For example, in Rel-15 NR, the spatial relation information (a "PUCCH-SpatialRelationInfo" information element of RRC) between a certain reference signal (RS) and an uplink control channel (Physical Uplink Control Channel (PUCCH)) may be included in PUCCH configuration information (a "PUCCH-Config" information element of RRC) to be configured for the UE.

The certain RS may be at least one of a synchronization signal block (SSB), a channel state information reference signal (Channel State Information-Reference Signal (CSI-RS)), and a reference signal for measurement (Sounding Reference Signal (SRS)).

The SRI to be configured may include an SRI Identifier (ID) for identifying the SRI. The SRI may include at least one of an SSB index, a CSI-RS resource ID, and an SRS resource ID as an index of the certain RS. These pieces of spatial relation information may include a serving cell index, a bandwidth part (BWP) ID, or the like corresponding to the certain RS.

Note that, in the present disclosure, an index, an ID, an indicator, a resource ID, and the like may be interchangeably interpreted.

When the UE is configured with the spatial relation information related to the SSB or the CSI-RS and the PUCCH, the UE may transmit the PUCCH, using the same spatial domain filter as the spatial domain filter for reception of the SSB or the CSI-RS. In other words, in this case, the UE may assume that a UE receive beam for the SSB or the CSI-RS and a UE transmit beam for the PUCCH are the same.

When the UE is configured with the spatial relation information related to the SRS and the PUCCH, the UE may transmit the PUCCH, using the same spatial domain filter as the spatial domain filter for transmission of the SRS. In other words, in this case, the UE may assume that a UE transmit beam for the SRS and a UE transmit beam for the PUCCH are the same.

Note that a spatial domain filter for transmission of the base station, a downlink spatial domain transmission filter, and a transmit beam of the base station may be interchangeably interpreted. A spatial domain filter for reception of the base station, an uplink spatial domain receive filter, and a receive beam of the base station may be interchangeably interpreted.

A spatial domain filter for transmission of the UE, an uplink spatial domain transmission filter, and a transmit beam of the UE may be interchangeably interpreted. A spatial domain filter for reception of the UE, a downlink spatial domain receive filter, and a receive beam of the UE may be interchangeably interpreted.

The UE may be configured with the SRI for each PUCCH configuration (PUCCH-Config). The SRI configured by the PUCCH configuration may be applied to all of the PUCCH resources configured by the PUCCH configuration.

When more than one SRI related to the PUCCH is configured, the UE may perform control so that one PUCCH SRI becomes active for one PUCCH resource at certain time, based on a PUCCH spatial relation activation/deactivation MAC CE.

### (Multi-TRP PDSCH)

For NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (for example, TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be employed.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI, single PDCCH) (single master mode, multi-TRP based on single DCI (single-DCI based multi-TRP)). The plurality of PDSCHs from the multi-TRP may be separately scheduled by using a plurality of pieces of DCI (multi-DCI, multi-PDCCH (multiple PDCCHs)) (multi-master mode, multi-TRP based on multi-DCI (multi-DCI based multi-TRP)) .

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a channel with high quality is possible.

To support intra-cell (with the same cell ID) and inter-cell (with different cell IDs) multi-TRP transmission based on a plurality of PDCCHs, one control resource set (CORESET) in PDCCH configuration information (PDCCH-Config) may correspond to one TRP in RRC configuration information for linking a plurality of pairs of a PDCCH and a PDSCH with a plurality of TRPs.

When at least one of conditions 1 and 2 below is satisfied, the UE may determine that it is multi-TRP based on multi-DCI. In this case, a TRP may be interpreted as a CORESET pool index.

### {Condition 1}

One CORESET pool index is configured.

### {Condition 2}

Two different values (for example 0 and 1) of a CORESET pool index are configured.

When the following condition is satisfied, the UE may determine that it is multi-TRP based on single DCI. In this case, two TRPs may be interpreted as two TCI states indicated by a MAC CE/DCI.

### {Condition}

To indicate one or two TCI states for one codepoint of a TCI field in DCI, an "enhanced TCI states activation/deactivation for UE-specific PDSCH MAC CE" is used.

DCI for common beam indication may be a UE-specific DCI format (for example, DL DCI format (for example, 1_1, 1_2)), may be a UL DCI format (for example, 0_1, 0_2), or may be a UE-group common DCI format.

Incidentally, in future radio communication systems (for example, Rel. 17 or later versions), enhancement of beam management of the UE having a plurality of panels (multi-panel) or beam management using a plurality of transmission/reception points (multi-Transmission/Reception Point (TRP)) has been under study.

When the terminal (UE) performs communication using a plurality of transmission/reception points (TRPs)/UE panels, it can also be considered that beam failure detection is performed for each TRP/UE panel. However, studies on how to control a beam failure detection (BFD) or beam failure recovery (BFR) procedure in each TRP/UE panel have not been fully carried out.

For example, in the BFR procedure, the UE that has performed notification of information such as a beam failure/new candidate RS performs subsequent transmit/reception processing (for example, QCL assumption/spatial relation assumption/UL power control), based on a response from the base station (for example, a base station response/gNB response).

### [BFR for PCell/PSCell in Rel. 15]

In the BFR procedure of Rel. 15, when the UE detects a radio link failure in the PCell/PSCell, the UE transmits the PRACH. The base station response may be a response signal (for example, PDCCH transmission) for the PRACH (for example, the PRACH for BFR) notified from the UE. The PDCCH may be transmitted using the search space set configured using higher layer signaling (for example, recoverySearchSpaceId). UE operation after the base station response may be PUCCH transmission/PDCCH monitoring based on a certain condition.

For example, when the UE receives the base station response (for example, the PDCCH), the UE may perform control to transmit the PUCCH, using the same spatial filter as that of the last PRACH transmission in the same cell as that of the PRACH transmission. Transmission power of the PUCCH may be controlled based on power control parameters (for example, qᵤ = 0, q_{d} = q_{new}, and 1 = 0). These certain conditions (for example, the spatial filter/transmission power) may be applied from 28 symbols after the last symbol of the first received base station response (for example, the PDCCH) until the UE receives an activation command of the PUCCH spatial relation information (for example, PUCCH-SpatialRelationInfo) or until the UE is provided with the PUCCH spatial relation information (for example, PUCCH-SpatialRelationInfo) of a PUCCH resource.

Here, qᵤ may be a PUCCH P0 ID (p0-PUCCH-Id) indicating PUCCH P0 (P0-PUCCH) in a PUCCH P0 set (p0-Set). q_{d} is an RS resource index of an RS (path loss reference RS) for path loss calculation (estimation) for the PUCCH. q_{new} is a new candidate beam (or a new candidate beam index, a reference signal index corresponding to a new candidate beam, a reference signal index for BFR). 1 is an index of a power control adjustment state (closed loop) for the PUCCH.

When the UE receives the base station response (for example, the PDCCH), after a certain period, the UE may assume the same antenna port quasi-co-location parameter as that associated with a certain index (for example, q_{new}) for PDCCH monitoring in a control resource set of a certain index (for example, index 0). "After a certain period" may be 28 symbols after the last symbol of the base station response (for example, the PDCCH) first received by the UE.

For the PCell or the PSCell, if a BFR MAC CE is transmitted in a Msg 3 or a Msg A of a contention-based random access procedure and the PUCCH resource is provided with the PUCCH spatial relation information (for example, PUCCH-SpatialRelationInfo), 28 symbols after the last symbol of PDCCH reception for determining completion of the random access procedure, the UE transmits the PUCCH in the same cell as that of the PRACH transmission. The PUCCH transmission uses the same spatial filter as that of the last PRACH transmission. The PUCCH transmission uses power determined using qᵤ = 0, q_{d} = q_{new}, and 1 = 0. Here, q_{new} is an SS/PBCH block index selected for the last PRACH transmission.

### [BFR for SCell in Rel. 16]

In the BFR procedure of Rel. 16, when the radio link quality in the SCell becomes worse than a certain value, the UE may transmit a corresponding SCell index, information (for example, q_{new}) related to a new candidate beam, or the like, using a PUSCH MAC CE (for example, a first PUSCH/1^{st} PUSCH MAC CE). The base station response may be a response signal (for example, PDCCH transmission) for the MAC CE (for example, the first PUSCH) notified from the UE. The PDCCH may be applied to a DCI format for scheduling PUSCH transmission having the same HARQ process number as transmission of the first PUSCH and a toggled NDI field value. UE operation after the base station response may be PUCCH transmission/PDCCH monitoring based on a certain condition.

For example, when the UE receives the base station response (for example, the PDCCH), the UE may perform monitoring of the PDCCH in all of the control resource sets in the SCell indicated by the MAC CE. In this case, the UE may perform monitoring of the PDCCH, using the same antenna port quasi-co-location parameter as a corresponding index (for example, q_{new}).

When the UE receives the base station response (for example, the PDCCH) and satisfies the certain condition, the UE may control transmission of the PUCCH, using the same spatial domain filter as that corresponding to q_{new} for periodic CSI-RS or SS/PBCH block reception in the PUCCH Cell. In this case, the transmission power of the PUCCH may be controlled based on the power control parameters (for example, qᵤ = 0, q_{d} = q_{new}, and 1 = 0).

For example, the certain condition may be at least one or all of a condition that the spatial relation information for the PUCCH (for example, a certain higher layer parameter for the PUCCH (for example, PUCCH-SpatialRelationInfo)) is provided (condition1), a condition that the PUCCH having a link recovery request (LRR) has not been transmitted, or has been transmitted in the PCell/PSCell (condition2), and a condition that a PUCCH SCell is included in the SCell indicated by the MAC CE (condition3).

In this manner, although the BFR procedure is supported in existing systems (for example, Rel. 15/Rel. 16), when the UE performs communication using a plurality of TRPs/UE panels, how to control the BFD/BFR procedure in each TRP/UE panel poses a problem.

For example, after BFR completion, a PDCCH/PUCCH beam is updated to q_{new}. On the other hand, in BFR of the multi-TRP (for example, M-TRP BFR), whether a PDSCH beam is updated to q_{new} has been under study.

For example, after receiving a response from the base station (for example, a gNB response), the UE may assume that QCL assumption of the PDSCH scheduled by the PDCCH in the CORESET related to the TRP in which a beam failure has occurred (for example, a failed TRP) is linked to the latest q_{new} that has been reported (for example, latest reported q_{new}) until update of the TCI state is indicated (or update of the TCI state is received) from the base station (assumption #1). Such assumption may be applied to the SCell and the SpCell (for example, the PCell/PSCell). Alternatively, such assumption may be applied to the multi-DCI case.

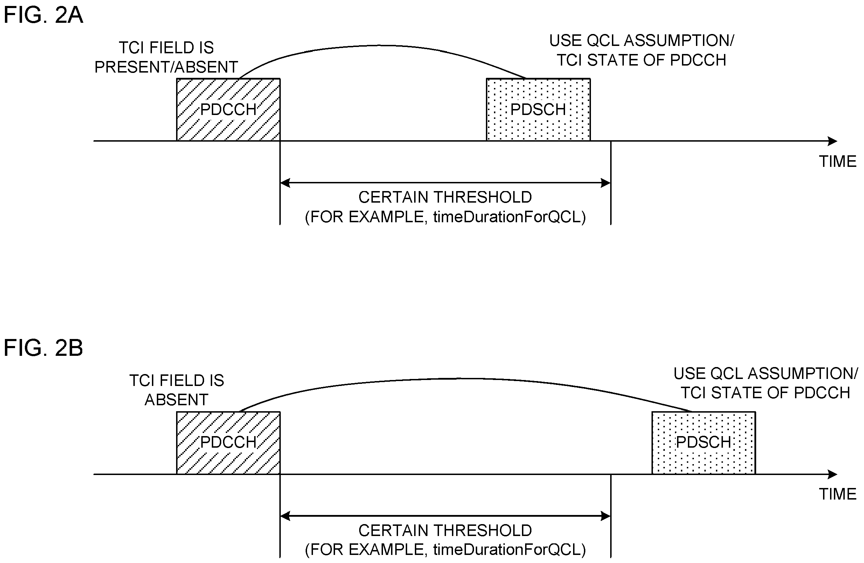

In a Rel-15 network, usually, a TCI state field is absent (that is, a higher layer parameter (for example, tciPresentInDCI) for indicating presence or absence of the TCI state field in DCI is not configured). Thus, in the following cases, a beam of the PDSCH (or QCL assumption/TCI state) may be derived from a beam of the PDCCH/CORESET (or QCL assumption/TCI state).
- A case in which a scheduling offset is smaller than a certain period (for example, timeDurationForQCL) (see FIG. 2A).
- A case in which a scheduling PDCCH does not include the TCI state field, and the scheduling offset is equal to or more than the certain period (for example, timeDurationForQCL) (see FIG. 2B).

Thus, the base station need not be required to transmit a MAC CE for the TCI state of the PDSCH. In the current specifications, after BFR completion, when a PDCCH beam is updated to q_{new}, a PDSCH beam derived from the PDCCH beam is also updated to q_{new}, and when the UE receives a MAC CE for the TCI state of the PDCCH, beam assumption of the PDCCH/PDSCH of the UE may be updated collectively.

However, this means that, when assumption #1 above is introduced/supported, the PDSCH beam is updated to q_{new}, and the PDSCH beam is not derived from the PDCCH beam. In this case, even if the base station transmits the MAC CE (for example, the MAC CE for the TCI state of the PDCCH) in order to update the PDCCH beam, the PDSCH beam remains q_{new} without being updated.

In view of this, the inventors of the present invention studied a condition/restriction in update of the PDSCH beam to q_{new}, and came up with the idea of the present embodiment. With this, the PDSCH beam is updated to q_{new} under a certain condition rather than the PDSCH beam being updated to q_{new} in all cases, and consequently update of the PDSCH beam can be flexibly controlled.

Embodiments according to the present disclosure will be described in detail with reference to the drawings as follows. The aspects to be described below may each be employed individually, or may be employed in combination.

In the present disclosure, the UE may be a UE that performs transmission and reception to and from the TRP, using a plurality of panels. Each panel may correspond to each different TRP, one panel may correspond to a plurality of TRPs, or a plurality of panels may correspond to one TRP.

In the present disclosure, a panel (or a panel index) of the UE may correspond to a specific group. In this case, the UE may assume that a beam/RS of each group is measured in each panel of the UE. The UE may assume to simultaneously receive beams of a plurality of groups (using different panels).

In the present disclosure, the TRP may be interchangeably interpreted as a panel, an RS group, an antenna port group, a spatial relation group, a QCL group, a TCI state, a TCI state group, a CORESET group, a CORESET pool, or the like of the TRP (or the base station). A TRP index may be interchangeably interpreted as an RS group index, an antenna port group index, a QCL group index, a TCI state index, a TCI state group index, a CORESET group index, a CORESET pool index, or the like.

In the present disclosure, when a single DCI is applied, an n-th TRP (n is any integer (for example, 1 or 2)) may correspond to an n-th TCI state or an n-th code division multiplexing (CDM) group.

In the present disclosure, when a plurality of (Multiple) DCIs are applied, a first TRP may correspond to a CORESET without CORESETPoolIndex or a CORESET of CORESETPoolIndex = 0. A second TRP may correspond to a CORESET of CORESETPoolIndex = 1. When a plurality of DCIs are applied, the CORESET pool index may be configured.

In the present disclosure, the panel of the UE may be interchangeably interpreted as an RS group, an antenna port group, a spatial relation group, a QCL group, a TCI state group, a CORESET group, or the like.

In the present disclosure, the panel may be associated with a group index of an SSB/CSI-RS group. In the present disclosure, the panel may be associated with a TRP. In the present disclosure, a plurality of panels may be associated with a group index of a group beam-based report. In the present disclosure, the panel may be associated with a group index of an SSB/CSI-RS group for the group beam-based report.

In the present disclosure, a serving cell/cell may be interpreted as an SpCell, a PCell, a PSCell, or an SCell. The following description will take an example of a case in which two TRPs correspond to the serving cell, but three or more TRPs may correspond to the serving cell.

In the present disclosure, a BFD RS in which a beam failure has been detected, a (failed) BFD RS in which a failure has occurred, a TRP in which a beam failure has been detected, a (failed) TRP in which a failure has occurred, a UE panel that has detected a beam failure, and a (failed) UE panel in which a failure has occurred may be interchangeably interpreted.

In the present disclosure, A/B may mean at least one of A and B. In the present disclosure, A/B/C may mean at least one of A, B, and C.

In the present disclosure, a PUCCH resource and a PUCCH spatial relation may be interchangeably interpreted. In the present disclosure, a TRP, a TRP ID, a BFD-RS set ID, an NBI-RS set ID, and a CORESET pool index may be interchangeably interpreted. In the present disclosure, a failure and a beam failure may be interchangeably interpreted.

In the present disclosure, the PUCCH spatial relation information may be interpreted as a UL TCI state, a unified UL TCI state, or the joint DL/UL TCI state (unified joint DL/UL TCI state), spatial relation, or a spatial domain filter. In this specification, a certain ID may be information used for identification of a TRP (for example, identification information related to a TRP), for example, and may be interpreted as TRP identification information, a TRP-ID, a group ID, or a new ID.

In the present disclosure, a PUCCH, PUCCH transmission, a PUCCH resource, a PUCCH occasion, PUCCH spatial relation information, and spatial relation may be interchangeably interpreted.

A network (for example, the base station) may perform notification/configuration of the certain ID (hereinafter also referred to as TRP identification information) for the UE. For example, the base station may notify the UE of the TRP identification information, using higher layer signaling (or a higher layer parameter)/DCI.

The TRP identification information may be configured/defined being associated with (or corresponding to) the PUCCH spatial relation information. When a plurality of pieces of PUCCH spatial relation information are configured for the UE, each piece of PUCCH spatial relation information may be respectively associated with a certain piece of TRP identification information.

The following description will take an example of the BFR procedure of a case in which one or more transmission/reception points are used, but the present embodiment can also be applied in communication control other than the BFR procedure.

### (First Aspect)

A first aspect will describe a target/case in which the PDSCH beam is updated to a certain value (for example, q_{new}) after BFR completion. To update the PDSCH beam to q_{new} may be interpreted as to control reception of the PDSCH, based on q_{new}. "After BFR completion" may be interpreted as after reception of a response from the base station.

The UE may determine control of the PDSCH beam (for example, whether or not to update to q_{new}) after BFR completion, based on at least one of a type of a cell in which beam failure recovery is performed and an applied beam failure report mechanism. For example, the UE may update the PDSCH beam to q_{new} after BFR completion regarding at least one of the following option 1-1 to option 1-4.

### <Option 1-1>

For BFR for a CBRA (contention)/CFRA (contention free)-based SpCell, after BFR completion, the PDSCH beam may be updated to q_{new}. The BFR for the CBRA (contention)/CFRA (contention free)-based SpCell may be BFR using the CBRA (contention)/CFRA (contention free)-based PRACH of Rel. 15.

For example, after receiving a response from the base station (for example, a gNB response), the UE may assume that QCL assumption of the PDSCH scheduled by the PDCCH in the CORESET related to the SpCell in which a beam failure has occurred or the TRP of the SpCell is linked to the latest q_{new} that has been reported (for example, latest reported q_{new}) until update of the TCI state is indicated from the base station.

### <Option 1-2>

For BFR for a CBRA-based SpCell, after BFR completion, the PDSCH beam may be updated to q_{new}. The BFR for the CBRA-based SpCell may be BFR using the CBRA-based PRACH of Rel. 16. The BFR MAC CE may include a message 3/message A of CBRA BFR.

For example, after receiving a response from the base station (for example, a gNB response), the UE may assume that QCL assumption of the PDSCH scheduled by the PDCCH in the CORESET related to the SpCell in which a beam failure has occurred or the TRP of the SpCell is linked to the latest q_{new} that has been reported (for example, latest reported q_{new}) until update of the TCI state is indicated from the base station.

### <Option 1-3>

For BFR for a BFR MAC CE-based SCell, after BFR completion, the PDSCH beam may be updated to q_{new}. The BFR for the BFR MAC CE-based SCell may be BFR using the BFR MAC CE of Rel. 16.

For example, after receiving a response from the base station (for example, a gNB response), the UE may assume that QCL assumption of the PDSCH scheduled by the PDCCH in the CORESET related to the SCell in which a beam failure has occurred or the TRP of the SCell is linked to the latest q_{new} that has been reported (for example, latest reported q_{new}) until update of the TCI state is indicated from the base station.

### <Option 1-4>

For TRP-specific BFR for the PCell/SCell, after BFR completion, the PDSCH beam may be updated to q_{new}. The TRP-specific BFR for the PCell/SCell may be TRP-specific BFR for the PCell/SCell of Rel. 17. The TRP may be a multi-DCI (for example, M-DCI)-based M-TRP, or may be a single DCI (for example, S-DCI)-based M-TRP. In a BFR report, the BFR MAC CE may be used.

For example, after receiving a response from the base station (for example, a gNB response), the UE may assume that QCL assumption of the PDSCH scheduled by the PDCCH in the CORESET related to the PCell/SCell in which a beam failure has occurred or the TRP of the PCell/SCell is linked to the latest q_{new} that has been reported (for example, latest reported q_{new}) until update of the TCI state is indicated from the base station.

### (Second Aspect)

A second aspect will describe a condition/case in which the PDSCH beam is updated to a certain value (for example, q_{new}) (or a condition/case in which update to the certain value is restricted) after BFR completion. Note that at least one of option 1-1 to option 1-4 of the first aspect and at least one of option 2-1 to option 2-5 of the second aspect may be applied in combination.

As a condition/case in which the PDSCH beam is updated to q_{new} after BFR completion, it may be applied only when a certain condition/case (for example, at least one of the following option 2-1 to option 2-5) is satisfied.

### <Option 2-1>

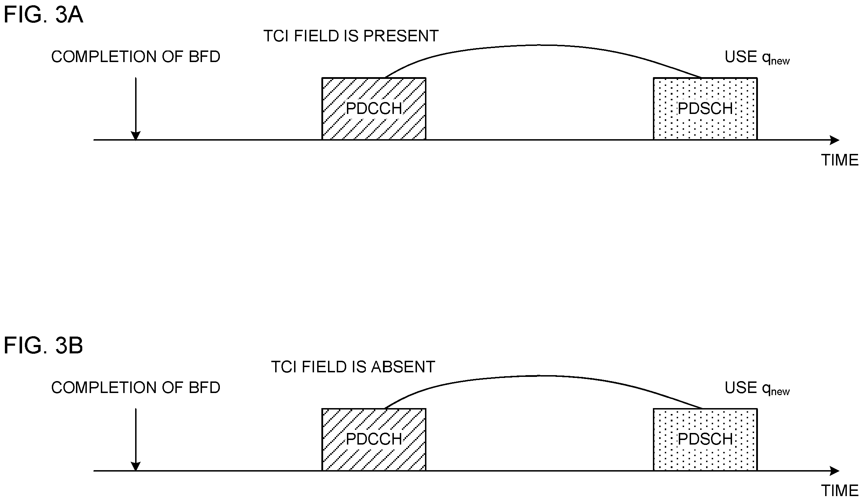

In a case where inclusion of the TCI state field in DCI is configured, the UE may update the PDSCH beam to q_{new} after BFR completion (see FIG. 3A). The case where inclusion of the TCI state field in DCI is configured may be a case where a certain higher layer parameter (for example, tci-PresentInDCI) is configured/enabled/activated.

For example, only when the TCI state field is present in DCI (for example, DCI for scheduling the PDSCH) (that is, tci-PresentInDCI is configured), after BFR completion, the UE may control reception of the PDSCH, using q_{new}.

With this, when the TCI state field is absent, a mechanism of existing systems in which the PDSCH beam is invariably derived from the PDCCH beam can be reused. On the other hand, when the TCI state field is present, q_{new} can be used for the PDSCH after BFR completion. In this case, the base station may transmit the MAC CE for the TCI state of the

### PDSCH.

### <Option 2-2>

When the PDSCH is scheduled by a DCI format in which the TCI state field is absent, after BFR completion, the UE may update the PDSCH beam to q_{new} (see FIG. 3B) .

### <Option 2-3>

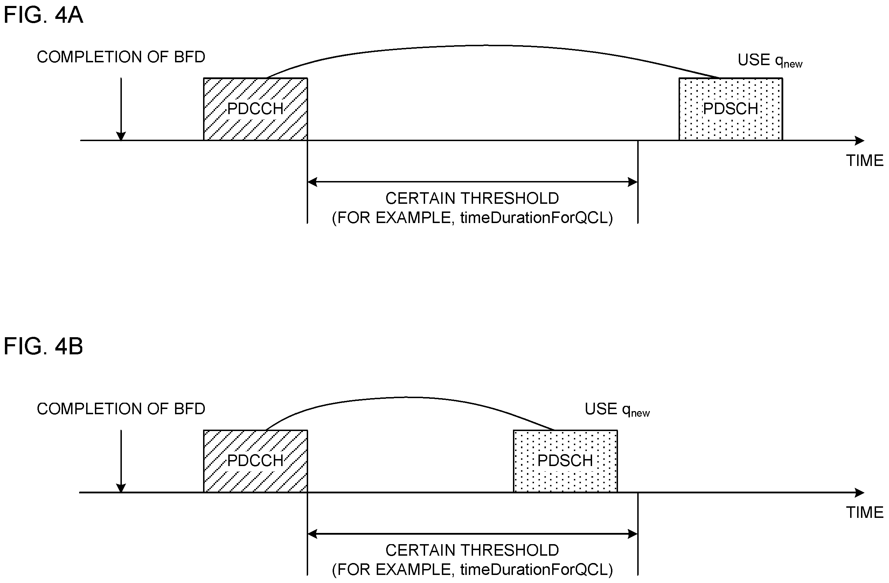

When a scheduling offset between the PDSCH and the PDCCH (or DCI/CORESET) for scheduling the PDSCH is equal to or more than a certain period (for example, timeDurationForQCL), the UE may update the PDSCH beam to q_{new} (see FIG. 4A). For example, when "the scheduling offset between the PDSCH and the PDCCH for scheduling the PDSCH ≥ timeDurationForQCL" holds, after BFR completion, the UE may receive the PDSCH, based on q_{new}.

### <Option 2-4>

When a scheduling offset between the PDSCH and the PDCCH (or DCI/CORESET) for scheduling the PDSCH is equal to or more than a certain period (for example, timeDurationForQCL), the UE may update the PDSCH beam to q_{new} (see FIG. 4B). For example, when "the scheduling offset between the PDSCH and the PDCCH for scheduling the PDSCH < timeDurationForQCL" holds, after BFR completion, the UE may receive the PDSCH, based on q_{new}.

### <Option 2-5>

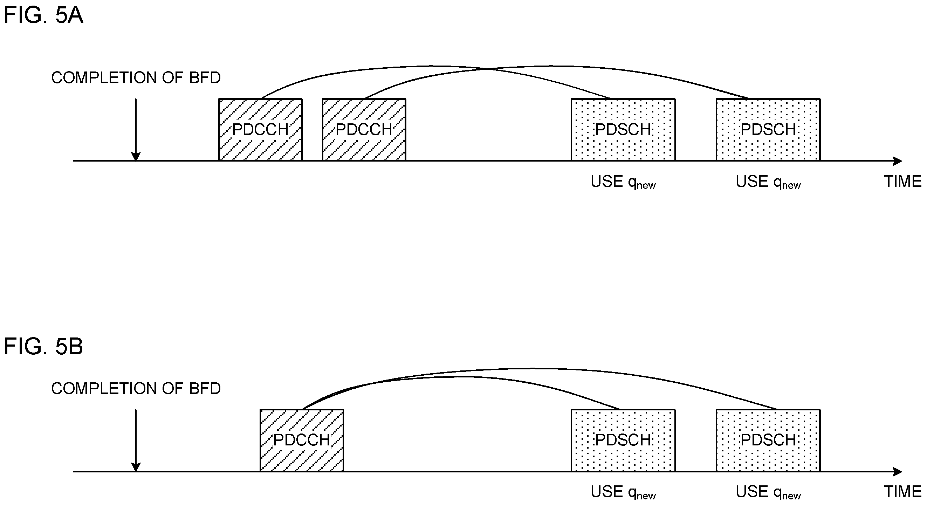

When at least one of the multi-DCI-based multi-TRP (for example, see FIG. 5A), the single DCI-based multi-TRP (see FIG. 5B), and the single TRP is applied, the UE may update the PDSCH beam to q_{new}.

In at least one of option 2-1 to option 2-5, q_{new} corresponding to the PDSCH may be maintained until the UE is indicated with update of the TCI state of the PDCCH/PDSCH (or receives update of the TCI state of the PDCCH/PDSCH) from the base station. The PDCCH/PDSCH for which update of the TCI state is indicated may have the same CORESET pool index/BFD-RS set/TRP as that of the PDSCH updated to q_{new}.

Note that, in the second aspect, as a condition/case in which the PDSCH beam is updated to q_{new}, it may be applied to a case where at least two or more of option 2-1 to option 2-5 are satisfied. Combinations of at least two or more of option 2-1 to option 2-5 may be, for example, option 2-1 and option 2-3, option 2-1 and option 2-4, option 2-1 and option 2-5, option 2-1, option 2-3 and option 2-5, and option 2-1, option 2-4 and option 2-5. As a matter of course, the combinations of the options are not limited to these.

### <Variations>

Assumption #1 described above may be replaced with at least one of the following assumption #2 and assumption #3 to be applied to the first aspect/second aspect.

For example, after receiving a response from the base station (for example, a gNB response), when tciPresentInDCI is configured, the UE may assume that QCL assumption of the PDSCH scheduled by the PDCCH in the CORESET related to the TRP in which a beam failure has occurred (for example, a failed TRP) is linked to the latest q_{new} that has been reported (for example, latest reported q_{new}) until update of the TCI state is indicated (or update of the TCI state is received) from the base station (assumption #2). Such assumption may be applied to the SCell and the SpCell (for example, the PCell/PSCell). Alternatively, such assumption may be applied to the multi-DCI case.

For example, the following case is assumed: after the UE receives a response from the base station (for example, a gNB response), when tciPresentInDCI is configured, a time offset between reception of DL DCI and the PDSCH of a corresponding serving cell (for example, the PDSCH associated with the CORESET pool index) is equal to or more than a certain threshold value (for example, timeDurationForQCL). In this case, the UE may assume that QCL assumption of the PDSCH scheduled by the PDCCH in the CORESET related to the TRP in which a beam failure has occurred (for example, a failed TRP) is linked to the latest q_{new} that has been reported (for example, latest reported q_{new}) until the UE is indicated with update of the TCI state of the PDSCH (for example, the PDSCH associated with the same CORESET pool index) (or receives update of the TCI state) from the base station (assumption #3). Such assumption may be applied to the SCell and the SpCell (for example, the PCell/PSCell). Alternatively, such assumption may be applied to the multi-DCI case.

The PDSCH in the first aspect/second aspect may be the PDSCH in which the TCI state of Rel. 15/16 is configured. Alternatively, the PDSCH may be the PDSCH in which the TCI state of Rel. 17 (for example, the unified TCI state/joint TCI state, or the separate TCI state/DL TCI state) is configured.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

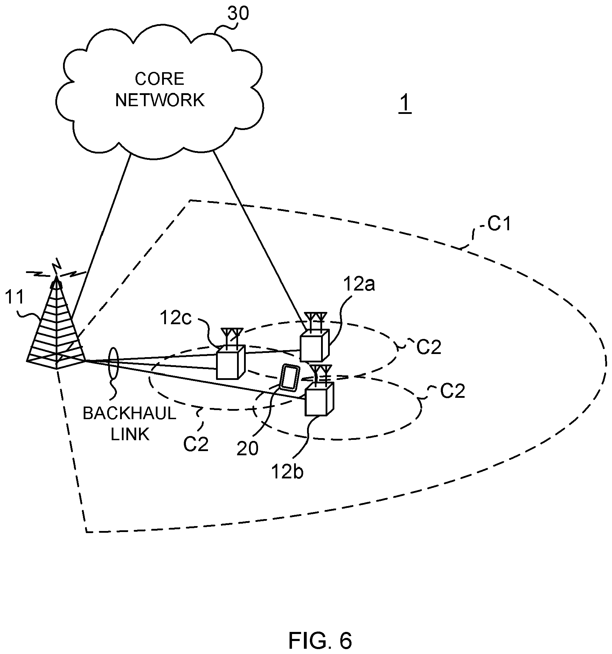

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

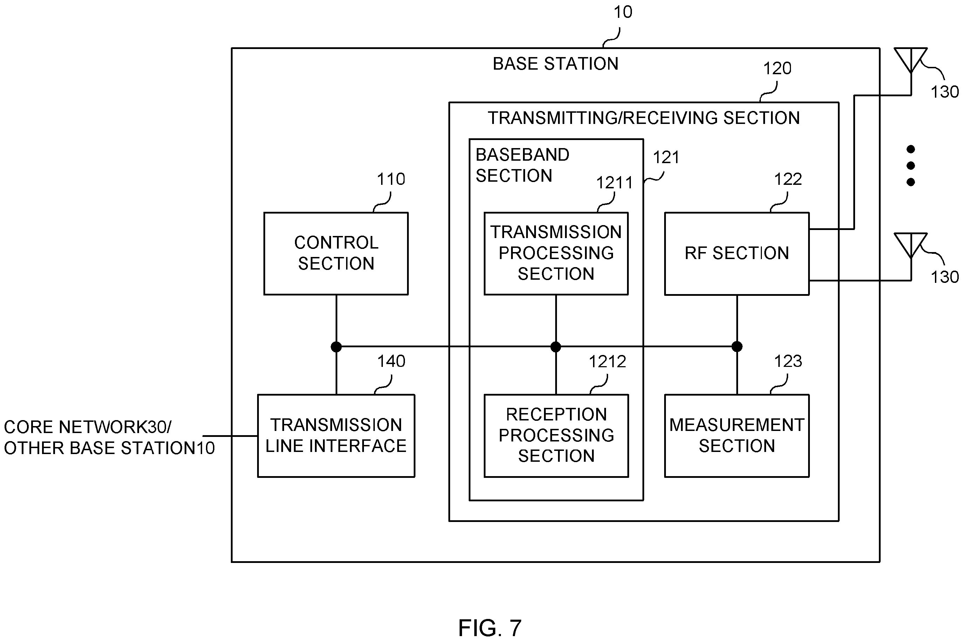

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may receive information related to a new candidate beam in beam failure recovery. The transmitting/receiving section 120 may transmit a downlink shared channel, based on quasi-co-location assumption.

The control section 110 may determine application of (or whether or not to apply) the new candidate beam as the quasi-co-location assumption corresponding to the downlink shared channel, based on whether or not a certain condition is satisfied, after the beam failure recovery completes.

### (User Terminal)

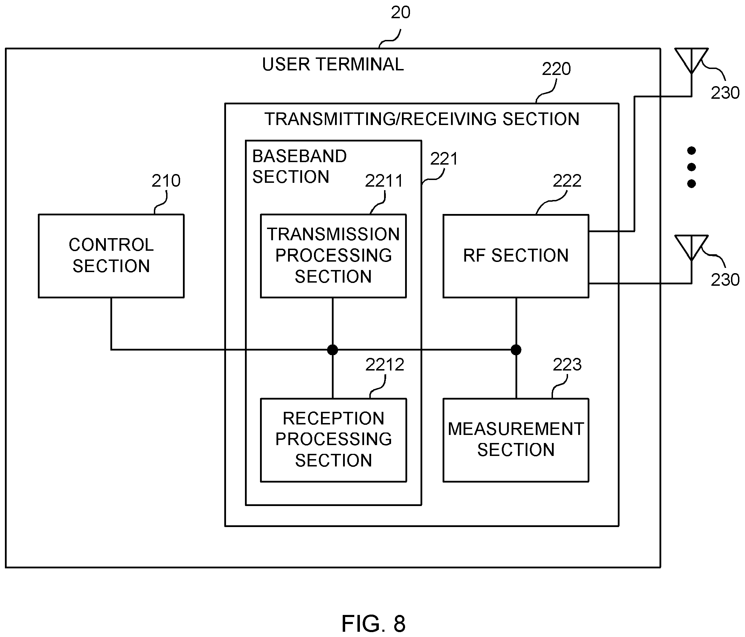

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may report (or transmit) information related to a new candidate beam in beam failure recovery. The transmitting/receiving section 220 may receive a downlink shared channel, based on quasi-co-location assumption.

The control section 210 may determine application of (or whether or not to apply) the new candidate beam as the quasi-co-location assumption corresponding to the downlink shared channel, based on whether or not a certain condition is satisfied, after the beam failure recovery completes.

The certain condition may be at least one of a type of a cell in which the beam failure recovery is performed and an applied beam failure report mechanism. Alternatively, the certain condition may be whether or not a transmission configuration indication (TCI) state field is configured. Alternatively, the certain condition may be a scheduling offset between the downlink shared channel and a downlink control channel for scheduling the downlink shared channel.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

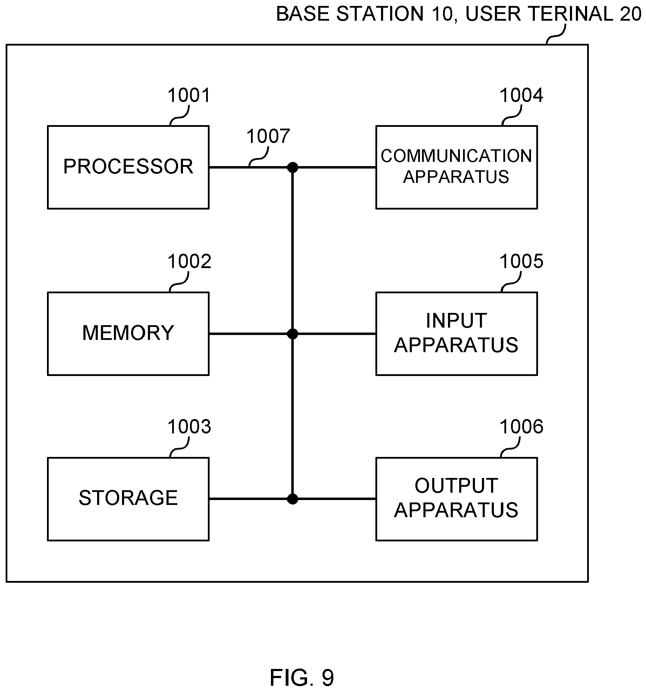

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

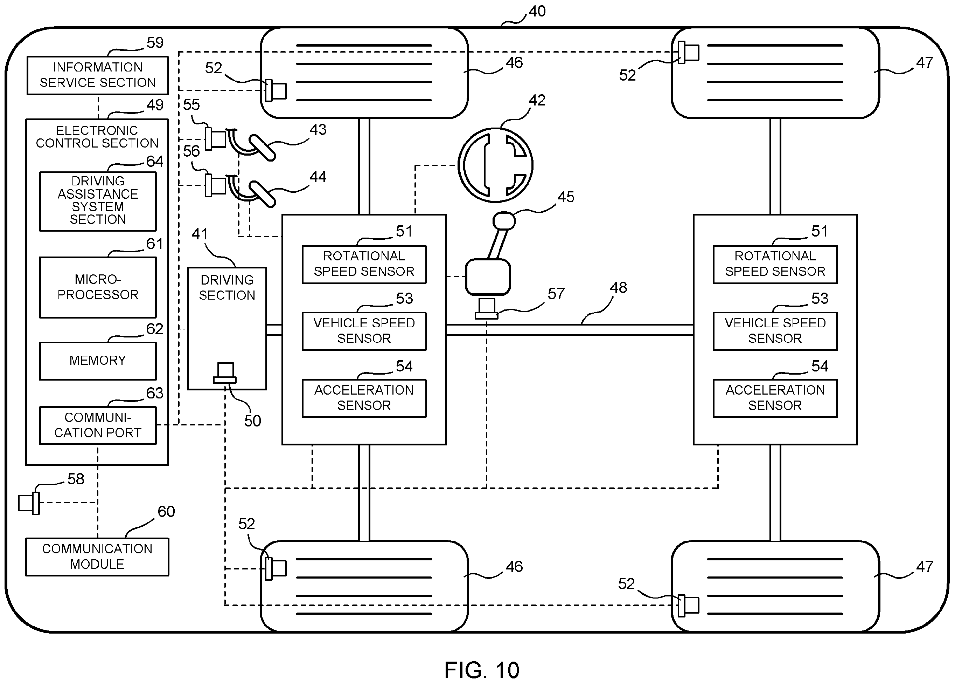

FIG. 10 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" and so on may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2021-188380 filed on November 19, 2021, the entire contents of which are incorporated herein by reference.

## Claims

1. A terminal comprising:
a transmitting section that reports information related to a new candidate beam in beam failure recovery;
a control section that determines application of the new candidate beam as quasi-co-location assumption corresponding to a downlink shared channel, based on whether or not a certain condition is satisfied, after the beam failure recovery completes; and
a receiving section that receives the downlink shared channel, based on the quasi-co-location assumption.

2. The terminal according to claim 1, wherein
the certain condition is at least one of a type of a cell in which the beam failure recovery is performed and an applied beam failure report mechanism.

3. The terminal according to claim 1 or 2, wherein
the certain condition is whether or not a transmission configuration indication (TCI) state field is configured.

4. The terminal according to any one of claims 1 to 3, wherein
the certain condition is a scheduling offset between the downlink shared channel and a downlink control channel for scheduling the downlink shared channel.

5. A radio communication method for a terminal, the radio communication method comprising:
reporting information related to a new candidate beam in beam failure recovery;
determining application of the new candidate beam as quasi-co-location assumption corresponding to a downlink shared channel, based on whether or not a certain condition is satisfied, after the beam failure recovery completes; and
receiving the downlink shared channel, based on the quasi-co-location assumption.

6. A base station comprising:
a receiving section that receives information related to a new candidate beam in beam failure recovery;
a control section that determines application of the new candidate beam as quasi-co-location assumption corresponding to a downlink shared channel, based on whether or not a certain condition is satisfied, after the beam failure recovery completes; and
a transmitting section that transmits the downlink shared channel, based on the quasi-co-location assumption.
